# FASCICULE DE BREVET EUROPEEN

(11) **EP 2 782 808 B1**
(45) Date de publication et mention de la délivrance du brevet: **23.03.2016**
(21) Numéro de dépôt: 12787741.3
(22) Date de dépôt: 19.11.2012
(51) Int. Cl.: B62B 1/14, B62B 1/16, B62B 1/24, B62C 1/04, E02F 3/64, B62B 5/02, B62B 1/20, B62B 5/00

(54) **VEHICULE DE TRANSPORT AVEC CHARGEMENT AU SOL ET PROCEDE D'UTILISATION DU VEHICULE ASSOCIE**
TRANSPORT- UND SCHAUFELVORRICHTUNG UND ENTSPRECHENDE BENUTZUNG
TRANSPORTING AND SHOVELING DEVICE AND ASSOCIATED USE

(30) Priorité: 23.11.2011 FR 1160713
(43) Date de publication de la demande: 01.10.2014
(73) Titulaire: Gobard, Benoît, 77120 Aulnoy (FR)
(72) Inventeur: Gobard, Benoît, 77120 Aulnoy (FR)
(74) Mandataire: Ipside
(86) Numéro de dépôt international: PCT/EP2012/072992
(87) Numéro de publication internationale: WO 2013/076040

(56) Documents cités:
- EP-A2- 1 462 306
- CA-A1- 2 271 347
- JP-A- 58 047 829
- US-A1- 2010 225 077

## Description

### DOMAINE TECHNIQUE DE L'INVENTION

L'invention concerne un véhicule de transport avec chargement au sol ainsi que le procédé d'utilisation dudit véhicule associé. L'invention trouve une application particulièrement avantageuse dans le domaine des véhicules de transport de matériaux en vrac, se présentant d'un seul bloc, ou liquides.

Le véhicule de transport selon l'invention peut notamment prendre la forme d'une brouette, d'un chariot à traction animale ou mécanique, d'une remorque, d'un tombereau de chantier et d'autres systèmes automoteurs servant au transport ou même d'un véhicule à quatre roues de type Quad ou à trois roues de type tricycle.

### ETAT DE LA TECHNIQUE

Le chargement d'un véhicule de transport (brouette, chariot, tombereau, camion, remorque...) nécessite généralement l'utilisation d'un outil ou engin de manutention type pelle, chargeur, élévateur pour élever la charge au dessus du plateau ou des ridelles du véhicule de transport.

Certains systèmes de chargement de type chargeuses sur pneus, tracteurs agricoles avec chargeur frontal, engins de manutention permettent de déposer le godet du chargeur ou la benne au sol afin de les remplir. Le remplissage du godet ou de la benne s'effectue soit en pénétrant le matériau foisonné par traction, soit en poussant le matériau à l'intérieur de la benne ou du godet à l'aide d'un outil. Ces godets ou bennes sont en général situés à l'extrémité d'un mécanisme de levage largement déporté vers l'avant ou vers l'arrière de l'engin. La capacité de chargement de ces engins est limitée, d'une part par la force du système de levage, souvent hydraulique, et d'autre part par la charge de basculement lorsque le centre de gravité de l'ensemble formé par l'engin et le chargement dépasse l'essieu au delà duquel s'effectue le chargement.

Pour les engins conventionnels destinés au chargement, le mécanisme de levage et de chargement est considéré comme étant devant l'engin, mais le chargement peut être considéré comme étant fait sur l'essieu arrière comme dans le cas d'un tracteur agricole équipé d'une benne couplée sur le système de relevage trois points; benne qui peut être déposée au sol. Ces engins sont équipés d'essieux rigides. La masse de l'engin située derrière l'essieu autour duquel s'exerce le basculement fait contre poids à la masse située devant l'essieu. Ces engins de levage et de chargement sont le plus souvent sur pneumatiques. Pour les engins de chargement sur chenille, l'axe de basculement se fait autour de l'axe passant par les roues folles à l'avant de l'engin ou autour de l'axe passant par les barbotins à l'arrière de l'engin.

Comme décrit dans le document FR2704189, certains systèmes de transport de type remorques ou brouettes proposent de déposer la benne ou le contenant recevant le matériau par dépose de la benne au niveau du sol au delà d'un essieu rigide. De même des systèmes de brouette proposent de déposer la benne contenant des matériaux en déposant la benne au delà d'un essieu rigide ou de l'axe des roues comme cela est décrit dans les documents GB2289024, GB2315048 et WO9737882.

Certains systèmes de plateau ou de remorque proposent d'escamoter les roues fixées latéralement à la benne ou au plateau pour déposer ces derniers au sol afin d'en faciliter leur chargement (voir par exemple les documents EP1065099 et FR2818607).

Les documents WO2005014366A1 et EP1533180 divulguent des systèmes intermédiaires proposant un positionnement latéral de roues sur le coté de la benne ou du plateau pour permettre un chargement par inclinaison. Le fond de la benne n'est toutefois pas complètement parallèle au sol, ce qui rend plus difficile leur chargement avec des matériaux foisonnés ou en blocs. Ce principe d'inclinaison du plateau ou de la benne est davantage adapté au chargement de véhicules ou objets roulants.

Certains systèmes de manutention proposent des systèmes de chargement au sol sans déport de charge au delà d'un essieu. Le système de levage, le plus souvent des fourches, est situé derrière des roues frontales. La charge est donc levée sans déport de charge. Un transpalette permet le levage d'une charge sans déport au delà de l'axe des roues avant ou des roues arrière. Certains systèmes de manutention proposent un positionnement latéral et avancé des roues. L'élévation de la charge se faisant par un mât vertical, comme décrit dans le document FR2669319. De même, des systèmes de manutentions de containers, le plus souvent utilisés dans des zones portuaires, élèvent des charges depuis le sol entre les axes des roues avant et arrière.

Certains engins de terrassement dits de type "scraper" présentent la caractéristique d'effectuer le chargement de leur benne située entre les essieux par décaissement de la terre à l'état de gisement, le soulèvement de la terre ou du matériau se faisant à quelques centimètres du sol pour permettre son transport.

Certains engins ou remorques auto-chargeuses, le plus souvent destinés à l'agriculture, présentent également la caractéristique d'effectuer leur chargement entre les essieux par des mécanismes de pick-up et convoyeurs. Hormis ces derniers systèmes où le chargement s'effectue entre les essieux, l'équilibre de l'engin de chargement est le plus souvent limité par le risque de basculement au delà de l'essieu qui supporte la charge manutentionnée. Les systèmes de levage avec déport au-delà d'un essieu ou d'un axe de roue sont donc limités par le contre poids opposé à la charge au delà de cet essieu ou de cet axe. Plus le déport du godet ou de la benne est important plus l'engin nécessite d'être équilibré dans sa conception, le plus souvent par l'addition de contrepoids pour l'équilibre de l'ensemble au moment du levage de la charge et pendant son déplacement ou transport. Le rapport entre la capacité de levage et le poids à vide de l'engin de chargement ou véhicule est limité par le déport de la charge.

Les systèmes de levage sans déport de charge ont en général un rapport entre la capacité de levage et le poids à vide du véhicule bien supérieur. En effet, le poids de l'engin étant limité aux nécessités du système de levage et de déplacement, il doit être suffisamment résistant et puissant pour lever et tenir la charge afin de la transporter.

Le document CA 2 271 347 A1 décrit un véhicule selon le préambule de la revendication 1

### OBJET DE L'INVENTION

L'invention a notamment pour but de proposer un véhicule de transport avec chargement au sol avec un déport de charge vers l'arrière du véhicule remédiant aux inconvénients des différents véhicules précités, l'invention permettant notamment de limiter au maximum le risque de basculement du véhicule et du matériau chargé.

A cette fin, l'invention concerne un véhicule de transport avec chargement au sol comportant
- au moins deux roues,
- un châssis porteur comportant une pièce en forme de U comportant deux bras en regard l'un de l'autre, les roues étant fixées sur les deux bras de la pièce en forme de U,
- un châssis de levage lié de façon mobile au châssis porteur par l'intermédiaire d'un système d'accouplement,
- un dispositif de maintien de charge, comme par exemple une benne, porté par le châssis de levage, permettant de maintenir le chargement, ce dispositif de maintien de charge occupant au moins en partie l'espace intérieur de la pièce en forme de U s'étendant entre les deux bras de la pièce en forme de U, de sorte qu'un axe de rotation des roues s'étendant entre les deux roues traverse le dispositif de maintien de charge lorsque le dispositif de maintien de charge est dans une position au sol,
- le châssis de levage étant mobile par rapport au châssis porteur, ce châssis de levage assurant le passage du dispositif de maintien de charge de la position au sol permettant le chargement du dispositif de maintien de charge à au moins une position relevée permettant le déplacement du véhicule,
- le système d'accouplement assurant un déplacement du châssis de levage de sorte que le centre de gravité d'un chargement du dispositif de maintien de charge se déplace vers l'arrière du véhicule lorsque ledit dispositif de maintien de charge passe de la position au sol à la position relevée,
- le système d'accouplement présente au minimum une première cinématique dans laquelle le dispositif de maintien se déplace vers l'arrière du véhicule en s'inclinant vers l'arrière du véhicule par rapport au sol de manière à assurer le maintien du chargement du dispositif de maintien lorsque ledit dispositif de maintien de charge passe de la position au sol à la position relevée.

Un tel déport de charge vers l'arrière du véhicule permet d'équilibrer le véhicule lors d'un transport de charge au contraire du document FR2669319 pour lequel le poids est toujours derrière l'essieu et ne peut pas être équilibré.

Selon une réalisation, dans la première cinématique le dispositif de maintien se déplace en s'inclinant vers l'arrière du véhicule de manière à simultanément déporter le centre de gravité du chargement et assurer le maintien du chargement dans le dispositif de maintien lorsque ledit dispositif de maintien de charge passe de la position au sol à la position relevée.

Selon une réalisation, le système d'accouplement présente une deuxième cinématique dans laquelle le dispositif de maintien de charge se déplace vers l'arrière du véhicule en maintenant le chargement à l'horizontal lorsque ledit dispositif de maintien de charge passe de la position au sol à la position relevée, le système d'accouplement pouvant passer d'une cinématique à l'autre.

Selon une réalisation, le centre de gravité du chargement du dispositif de maintien de charge est situé derrière l'axe de rotation des roues lorsque ledit dispositif de maintien de charge est dans la position au sol.

Selon une réalisation, le véhicule comporte un système de poussée en translation, de préférence un vérin, installé entre le châssis porteur et le châssis de levage ou directement sur le système d'accouplement.

Selon une réalisation, le dispositif de maintien de charge est choisi notamment parmi : une benne, un bac, une paire de fourches à palettes, des pinces ou un godet dit « godet 4 en 1 ».

Selon une réalisation, le système d'accouplement est multi-cinématique, ledit système d'accouplement comportant des chapes coulissantes sur le châssis porteur et/ou sur le châssis de levage et des biellettes établissant la liaison entre le châssis porteur et le châssis de levage, de sorte que
- dans la première cinématique, dite « cinématique à trajectoire en arc d'ellipse », le châssis de levage est mobile en rotation par rapport au châssis porteur autour d'un axe parallèle à l'axe de rotation des roues, de sorte que le châssis de levage assure par mouvement en arc d'ellipse le passage du dispositif de maintien de la position au sol à la position relevée, et
- dans la deuxième cinématique dite « cinématique à trajectoire quasi-rectiligne », le châssis de levage est mobile en translation par rapport au châssis porteur, de sorte que le châssis de levage assure par translation le passage du dispositif de maintien de charge de la position au sol à la position relevée en maintenant parallèle le fond du dispositif de maintien de charge par rapport au sol.

Selon une réalisation, le châssis porteur et le châssis de levage présentent chacun deux côtés perpendiculaires l'un par rapport à l'autre.

Selon une réalisation, le système d'accouplement présente une troisième cinématique, dite « cinématique de chargement » permettant de charger des matériaux en vrac dans le dispositif de maintien de charge prenant la forme d'une benne.

Selon une réalisation, l'axe passant par des centres instantanés de rotation définis par
- l'intersection des droites passant par les deux biellettes situées sur un des flancs du véhicule, et par
- l'intersection des droites passant par les deux biellettes situées sur un flanc opposé,
est situé en dessous du centre de gravité du chargement de manière à permettre le déport de charge vers l'arrière du véhicule dès le commencement de l'élévation.

Selon une réalisation, le dispositif de maintien de charge est couplé au châssis de levage de manière amovible par un système d'accouplement rapide permettant la dépose du support.

Selon une réalisation, le véhicule comporte un système de suspension positionné au niveau des intersections entre les bras de la pièce en forme de U du châssis porteur de manière à rendre les deux bras auxquels les roues sont fixées indépendants l'un de l'autre.

Selon une réalisation, les roues sont motorisées par un système de moteur.

Selon une réalisation, le véhicule comporte une tête d'attelage ou un dispositif d'accouplement relié au châssis porteur permettant le couplage du véhicule à un dispositif assurant sa motricité.

Selon une réalisation, le dispositif de maintien de charge comporte des roulettes fixées sur la partie inférieure du dispositif de maintien de charge pour faciliter le franchissement d'obstacles, tels que des marches ou un trottoir.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention. Elles montrent :
Figures 1 et 2 : des vues en perspective du véhicule de transport selon l'invention selon une « cinématique à trajectoire en arc d'ellipse » lorsque la benne est en position au sol ;
Figures 3 et 4 : des vues arrière et de dessous du véhicule des Figures 1 et 2;
Figure 5 : une vue en détail du système d'accouplement entre le châssis porteur et le châssis de levage du véhicule des Figures 1 et 2 ;
Figures 6, 7 et 8 : des vues respectivement en perspective, de côté, et arrière du véhicule des Figures 1 et 2 lorsque la benne est en position relevée ;
Figure 9 : une vue en détails du positionnement des chapes du système d'accouplement appartenant au châssis porteur dans une « cinématique à trajectoire en arc d'ellipse » ;
Figure 10 : une vue en perspective du véhicule selon l'invention selon une « cinématique à trajectoire quasi-rectiligne » ;
Figures 11 et 12 : des vues de côté du véhicule de la Figure 10 lorsque la benne se trouve respectivement en position au sol et en position relevée ;
Figure 13 : une vue en perspective du véhicule selon l'invention suivant une variante de réalisation dans laquelle l'articulation entre le châssis porteur et le châssis de levage est réalisée au niveau des pieds du véhicule ;
Figures 14 à 16 : des vues d'une variante de réalisation du véhicule selon l'invention dans laquelle le véhicule prend la forme d'une remorque ;
Figures 17 à 20 : des vues d'une variante de réalisation du véhicule selon l'invention dans laquelle la benne a été remplacée par une paire de fourches à palettes ;
Figure 21 : une vue en perspective d'une variante de réalisation du véhicule selon l'invention dans laquelle le véhicule prend la forme d'un chariot pour traction animale ;
Figure 22 : une vue de côté du mouvement du centre de gravité du chargement du dispositif de maintien de charge du véhicule selon l'invention suivant des cinématiques à trajectoire en arc d'ellipse et à trajectoire quasi-rectiligne ;
Figure 23 : une vue de côté d'une variante du véhicule de transport selon l'invention selon une cinématique de chargement ;
Figure 24 et 25 : une vue de côté du véhicule selon l'invention suivant une variante de réalisation dans laquelle le véhicule comporte deux roulettes facilitant le franchissement d'obstacles.

Les éléments identiques, similaires, ou analogues conservent la même référence d'une figure à l'autre.

### DESCRIPTION D'EXEMPLES DE REALISATION DE L'INVENTION

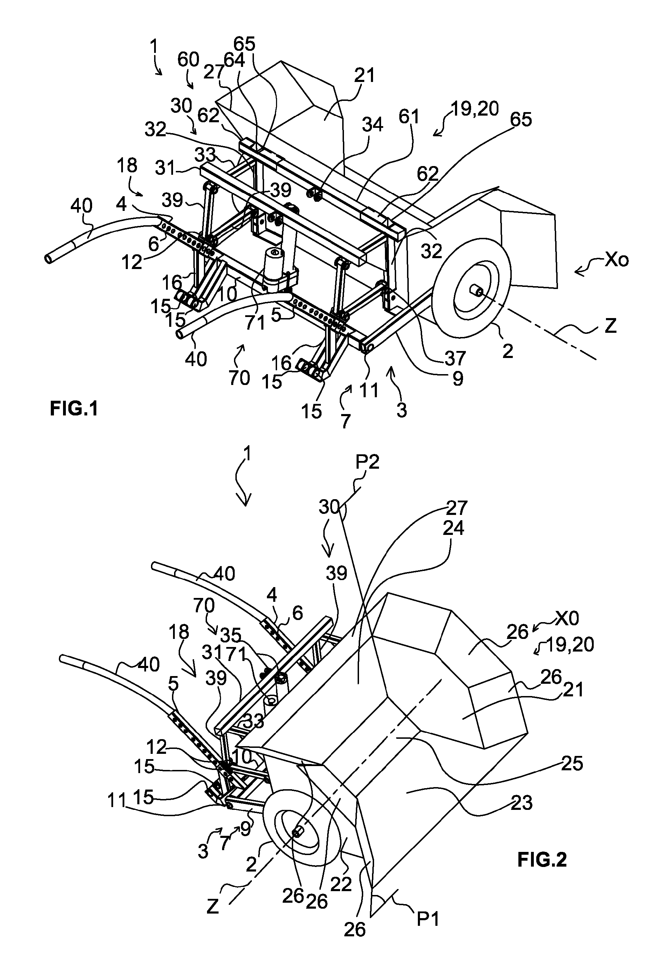

La Figure 1 montre un véhicule 1 de transport avec chargement au sol comportant deux roues 2, un châssis 3 porteur comportant une pièce 7 en forme de U comportant une barre 10 transversale et deux bras 8, 9 en regard l'un de l'autre, les roues 2 étant reliées aux deux bras 8, 9 par une liaison pivot. Les roues 2 sont reliées aux extrémités des deux bras 8, 9 en regard l'un de l'autre par une pièce 17 de liaison reliée solidairement aux bras 8, 9, cette pièce 17 de liaison étant munie d'une liaison pivot avec la roue 2. Un châssis 30 de levage est lié de façon mobile au châssis 3 porteur par l'intermédiaire d'un système 18 d'accouplement détaillé ci-après.

Un dispositif 19 de maintien de charge, porté par le châssis 30 de levage, comme par exemple une benne 20, permet de maintenir le chargement lors de son déplacement. Ce dispositif 19 de maintien occupe au moins en partie l'espace intérieur de la pièce 7 en forme de U s'étendant entre les deux bras 8, 9 de la pièce 7 en forme de U, de sorte qu'un axe Z de rotation des roues 2 s'étendant entre les deux roues 2 traverse les parois dudit dispositif 19 ou à tout le moins son chargement lorsque le dispositif 19 de maintien est dans une position X0 au sol. Le centre G de gravité d'un chargement normalisé du dispositif 19 de maintien de charge peut se situer derrière l'axe Z de rotation des roues 2 lorsque le dispositif 19 de maintien de charge est dans cette position X0 au sol.

Le châssis 30 de levage assure le passage du dispositif 19 de maintien de la position X0 au sol permettant le chargement du dispositif 19 de maintien à au moins une position X1 relevée permettant le déplacement du véhicule 1.

Lorsque le châssis 30 de levage assure le passage du dispositif 19 de maintien de charge de la position X0 au sol à la position X1 relevée, le châssis 30 de levage déplace le centre de gravité G d'un chargement normalisé du dispositif 19 de maintien de charge vers la partie arrière du véhicule derrière l'axe Z de rotation des roues 2.

Il est admis dans le domaine du chargement et du transport de matériau qu'un chargement normalisé est un chargement maximum lorsque le dispositif de maintien est en position au sol d'un matériau foisonné présentant un angle, défini par la norme ISO 7451, de 45 degrés avec le sol, cet angle correspondant à l'angle d'écoulement des matériaux au moment de leur extraction.

On considère dans ce document que la partie arrière du véhicule 1 se trouve du côté des brancards 40 ou de toute autre interface par laquelle le véhicule 1 est tracté tandis que la partie avant du véhicule 1 se situe du côté opposé des interfaces, à savoir du côté du dispositif 19 de maintien de charge.

Le déport de charge vers l'arrière du véhicule 1 permet d'équilibrer le véhicule 1 lors d'un transport de charge au contraire du document FR2669319 dans lequel le centre de gravité du chargement ne peut être déporté d'une façon significative vers l'arrière du véhicule.

Le système 18 d'accouplement présente une première cinématique dans laquelle le dispositif 19 de maintien se déplace vers l'arrière du véhicule en s'inclinant vers l'arrière du véhicule de manière à assurer le maintien du chargement du dispositif 19 de maintien lorsque ledit dispositif 19 de maintien de charge passe de la position X0 au sol à la position X1 relevée et une deuxième cinématique dans laquelle le dispositif 19 de maintien de charge se déplace vers l'arrière du véhicule en maintenant le chargement à l'horizontal lorsque ledit dispositif 19 de maintien de charge passe de la position X0 au sol à la position X1 relevée, le système 18 d'accouplement pouvant passer d'une cinématique à l'autre.

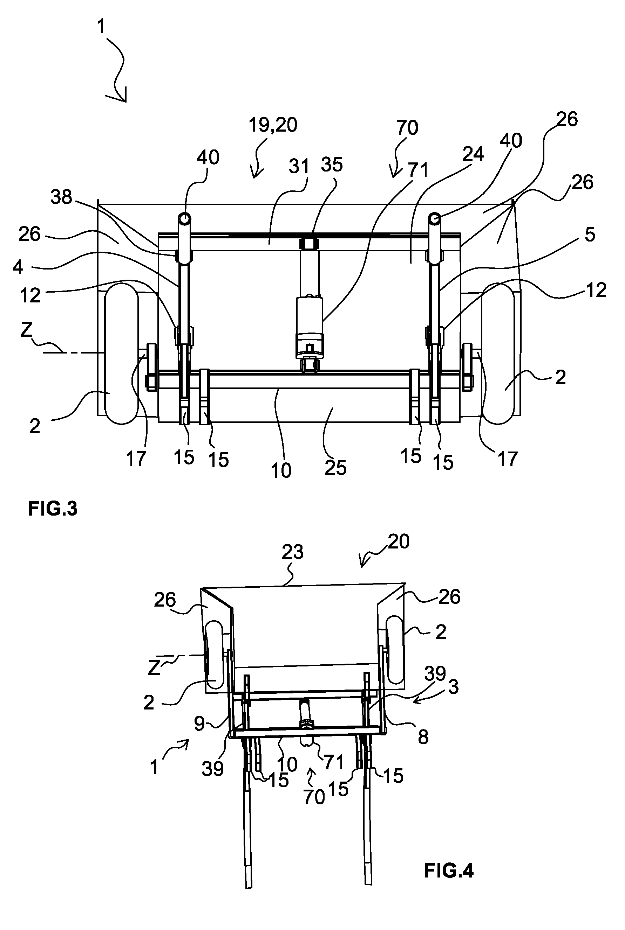

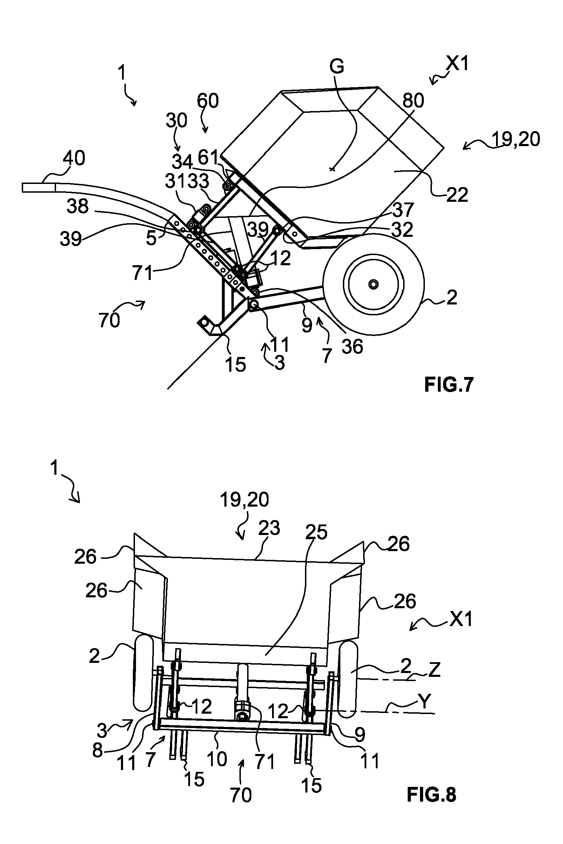

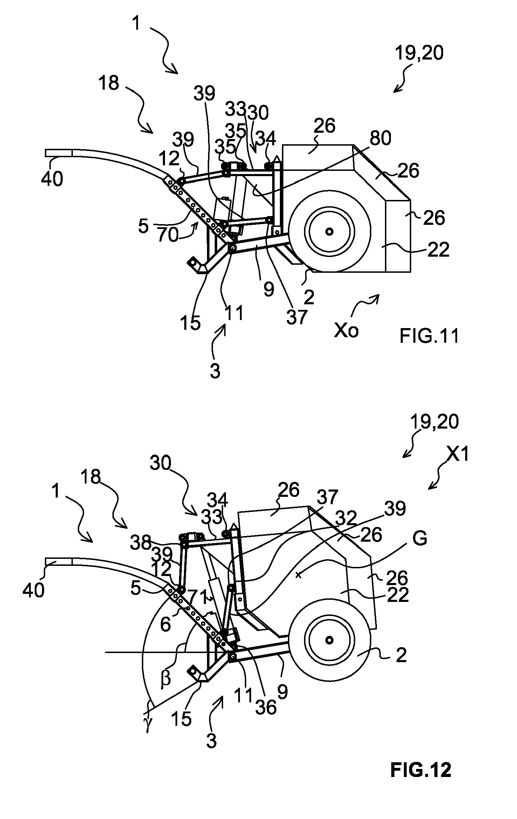

Plus précisément, dans un premier mode de réalisation montré sur les Figures 1 à 8, 10 à 12 et 17 à 20, le châssis 3 porteur comporte deux barres 4, 5 inclinées percées d'orifices 6 et la pièce 7 en forme de U. La pièce 7 en forme de U comporte les deux bras 8, 9 en regard l'un de l'autre et la barre 10 transversale reliant les deux bras 8, 9 entre eux. Les barres 4, 5 sont reliées solidairement à la barre 10 transversale et s'étendent vers l'extérieur du véhicule 1, c'est-à-dire du côté opposé à la benne 20. Ces barres 4, 5 forment un angle β de l'ordre de 45 degrés avec le plan dans lequel se trouve la pièce 7 en forme de U. Deux brancards 40 sont reliés solidairement aux extrémités des barres 4, 5 pointant vers l'arrière du véhicule 1. En variante, les barres 4, 5 sont reliées à la barre 10 transversale via une structure intermédiaire.

Par ailleurs, le châssis 30 de levage portant la benne 20 comporte une barre 61 d'accouplement avec la benne 20, une barre 31 arrière parallèle à la barre 61, ainsi que deux barres 33 orientées transversalement par rapport aux barres 31, 61 et reliées solidairement audites barres 31, 61. Le châssis 30 comporte également deux barres 32 verticales perpendiculaires au plan dans lequel se trouvent les barres 31, 33 et 61 reliées solidairement à la barre 61. La benne 20 est destinée à venir en appui contre les barres 32. Une plaque 80 de renforcement de forme triangulaire est reliée solidairement entre la barre 32 et la barre 33.

Le châssis 30 de levage est relié au châssis 3 porteur par le système 18 d'accouplement formé de chapes 12, appartenant au châssis porteur 3, de chapes 37, 38 appartenant au châssis 30 de levage, ainsi que quatre biellettes 39 de préférence de taille égale. Les biellettes 39 sont reliées par une extrémité au châssis 30 par l'intermédiaire des chapes 37, 38, et sont reliées par l'autre extrémité au châssis 3 porteur par l'intermédiaire des chapes 12 coulissantes des barres 4, 5 du châssis 3. La liaison entre les biellettes 39 et les chapes 12, 37, 38 sont des liaisons pivot à axe horizontal.

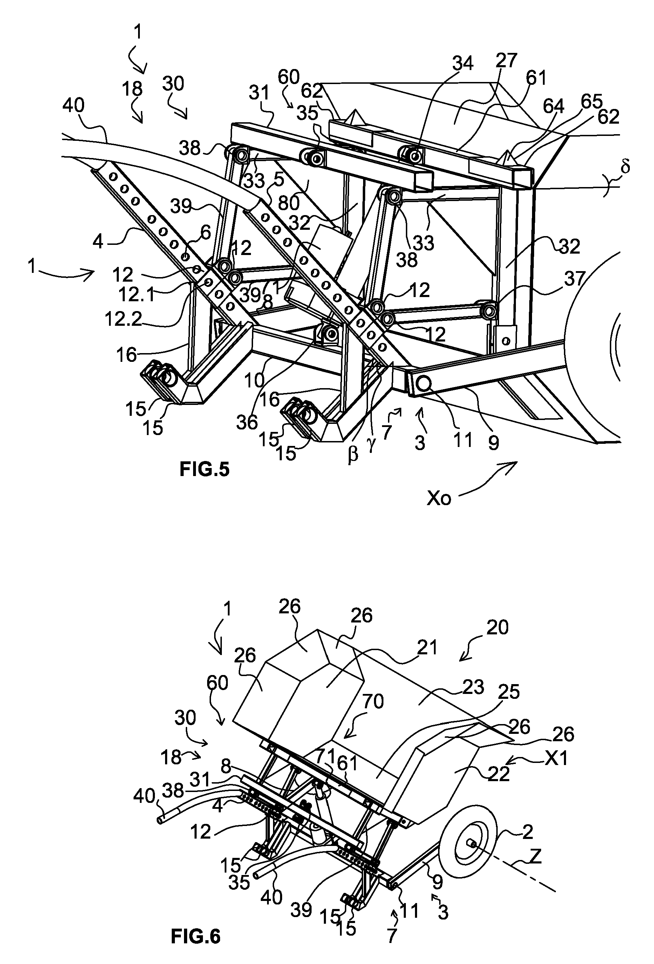

Plus précisément, comme visible sur la Figure 5, deux chapes 12 coulissantes sont positionnées sur chaque barre 4, 5 du châssis porteur 3. Ces chapes 12 sont munies de deux plaques 12.1 parallèles, percées d'un orifice 12.2 de même diamètre que les orifices 6 des barres 4, 5. Ces deux plaques 12.1 sont positionnées de part et d'autre de la barre 4, 5, de sorte que chaque chape 12 peut être déplacée le long d'une barre 4, 5 pour ajuster sa position, et être ensuite immobilisée dans la position souhaitée sur la barre 4, 5 au moyen d'une pièce cylindrique traversant l'orifice des deux plaques 12.1 de la chape 12 et un des orifices 6 des barres 4, 5. En variante, les chapes 12 sont positionnées sur les barres 4, 5 par l'intermédiaire d'un système de vérins, ou d'un système de rails sur lesquels coulissent les chapes 12.

Par ailleurs, une chape 37 fixe ou coulissante est reliée solidairement à chaque barre 32. Les chapes 37 sont positionnées sur le bord de la barre 32 parallèle au bord de cette barre 32 en appui avec la benne 20. Une chape 38 est reliée de manière fixe ou coulissante à l'extrémité de chaque barre 33 opposée à la benne 20.

Les biellettes 39 reliées par une de leurs extrémités aux chapes 37 sont reliées par leur autre extrémité à la chape 12 la plus proche de la chape 37. Les biellettes 39 reliées par une extrémité aux chapes 38 sont reliées par leur deuxième extrémité à la chape 12 la plus proche de la chape 38.

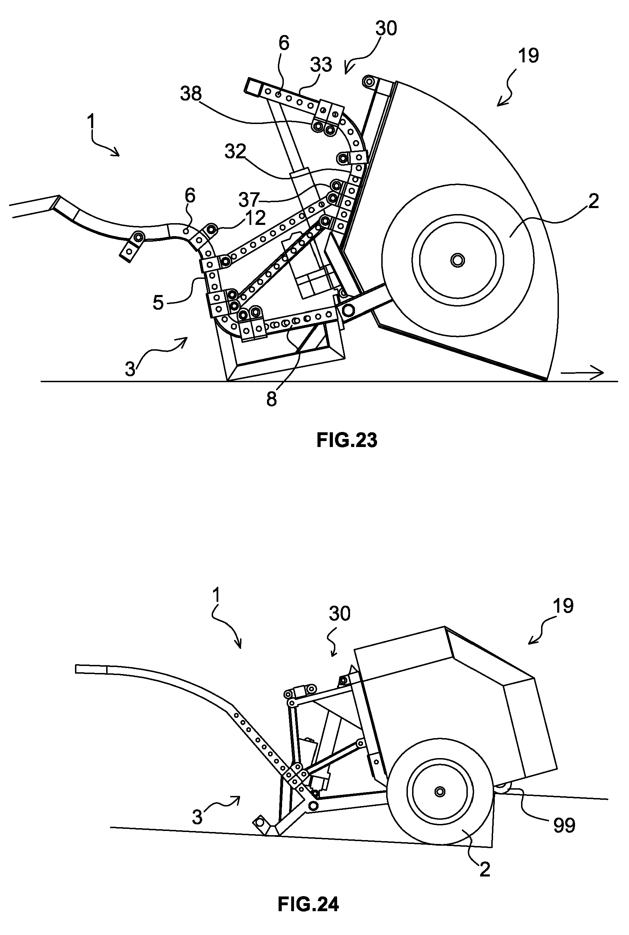

En variante, comme le montre la Figure 23, les barres 4, 8 et 5, 9 du châssis 3 porteur sont cintrées ou soudées en formant un angle valant sensiblement 90 degrés entre elles. Ainsi une partie de la barre formée par les barres 4, 8 est horizontale tandis que l'autre est verticale. De même, une partie de la barre formée par les barres 5, 9 est horizontale tandis que l'autre est verticale. Pour permettre le coulissement des chapes 37, 38, les barres 33 orientées transversalement viennent en continuité des barres 32 verticales en formant un arc tangent aux deux barres 32, 33, de sorte que le châssis porteur 3 et le châssis 30 de levage présentent chacun deux côtés perpendiculaires l'un par rapport à l'autre. Les barres 32 et 33 sont en outre percées d'orifices 6 et les chapes 37 et 38 deviennent alors coulissantes et prennent la même forme que les chapes 12.

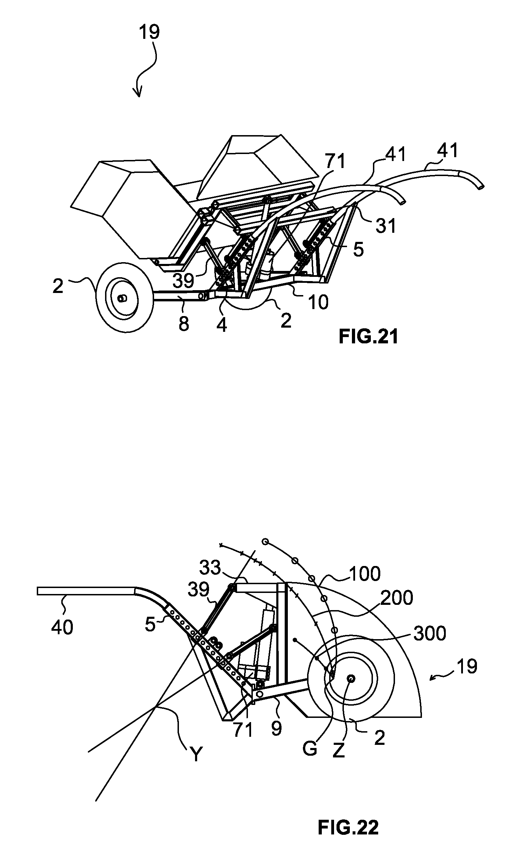

Suivant le positionnement des chapes coulissantes 12, les biellettes 39 permettent le déplacement de la benne 20 suivant des mouvements différents. Dans une configuration dite « cinématique à trajectoire en arc d'ellipse » montrée sur les Figures 1 à 9 et 14 à 16, les deux chapes 12 de chaque barre 4, 5 sont positionnées au niveau de deux orifices 6 adjacents, de sorte que sur chaque côté du véhicule 1 les deux biellettes 39 ont leur axe de rotation sur les chapes coulissantes proches l'un de l'autre. Une telle configuration permet au dispositif 19 de maintien de charge de se déplacer suivant un mouvement 100 en arc d'ellipse (montré en Figure 22) par rapport au châssis 3 porteur autour d'un axe Y mobile lors du passage de la benne 20 de la position X0 au sol à la position X1 relevée et parallèle à l'axe Z de rotation des roues 2 (montré en Figure 2). Cet axe Y passe par les centres instantanés de rotation définis par l'intersection des droites passant par les deux biellettes 39 situées sur l'un des flancs du véhicule 1 et par l'intersection des droites passant par les deux biellettes 39 situées sur un flanc opposé. L'axe Y est situé préférablement en dessous du centre G de gravité du chargement de manière à permettre le déport de charge vers l'arrière du véhicule dès le commencement de l'élévation. Dans cette cinématique le dispositif 19 de maintien se déplace en s'inclinant vers l'arrière du véhicule 1 de manière à simultanément déporter le centre de gravité G du chargement et assurer le maintien du chargement dans le dispositif 19 de maintien lorsque ledit dispositif 19 de maintien de charge passe de la position X0 au sol à la position X1 relevée.

En variante, les chapes 12 de chaque barre 4, 5 sont positionnées au niveau de deux orifices 6 non adjacents. Une telle configuration permet au dispositif 19 de maintien de charge de se déplacer suivant un mouvement 200 en arc d'ellipse (montré en Figure 22) par rapport au châssis 3 porteur autour d'un axe Y mobile lors du passage de la benne 20 de la position X0 au sol à la position X1 relevée et parallèle à l'axe Z de rotation des roues 2. Cette configuration permet ainsi de réaliser un mouvement dit mouvement de cavage qui maintient le chargement à l'intérieur de la benne. Plus les chapes 12 de chaque barre 4, 5 sont éloignées l'une de l'autre, plus le mouvement selon une trajectoire en arc d'ellipse du déplacement du dispositif 19 de maintien de charge est amplifié. Suivant cette réalisation, chaque barre 4, 5 pourrait comporter en variante une seule chape 12 reliant deux biellettes 39 au châssis 3 porteur sur un même axe de rotation, la cinématique suivant alors une trajectoire en arc de cercle.

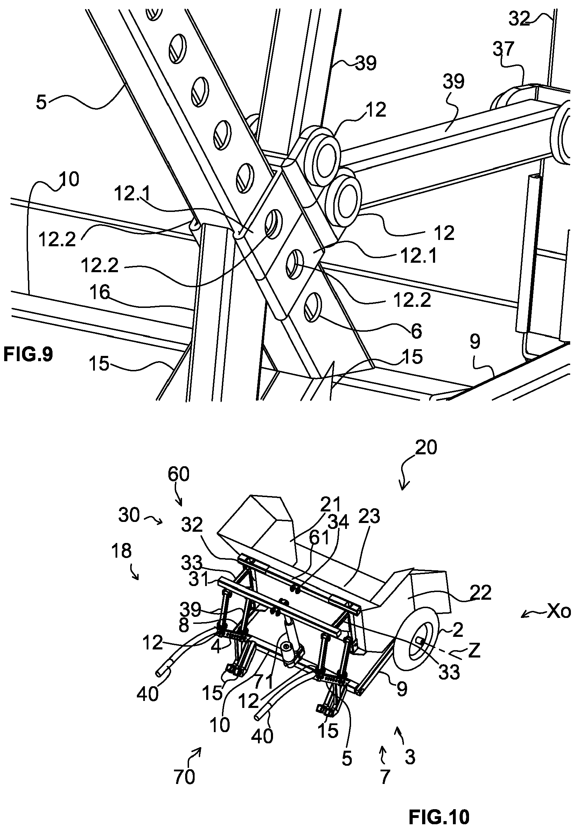

Dans une configuration dite « cinématique à trajectoire quasi-rectiligne » montrée sur les Figures 10 à 12 et 17 à 20, les deux chapes 12 de chaque barre 4, 5 sont positionnées de sorte que les biellettes 39 reliées à ces deux chapes 12 sont parallèles entre elles. A cet effet, par rapport à la cinématique à trajectoire en arc d'ellipse, les chapes 12 supérieures sont remontées le long des bras 4 et 5 de manière à être ensuite immobilisées ensuite dans des orifices 6 situés dans la partie supérieure des bras 4, 5. Une telle configuration permet au châssis 30 de levage et au dispositif 19 de maintien de charge d'effectuer un mouvement 300 de quasi-translation (montré en Figure 22) par rapport au châssis 3 porteur. Il est ainsi possible de conserver l'horizontalité du dispositif 19 de maintien de charge lors du passage de la position X0 du dispositif 19 à la position X1 du dispositif 19, ou du passage de la position X1 du dispositif 19 à la position X0 du dispositif 19, en maintenant parallèle le fond du dispositif 19 de maintien de charge par rapport au sol.

Pour interdire des configurations susceptibles d'endommager le système par collision des éléments entre eux, on peut prévoir une butée mécanique délimitant les zones de déplacement de chaque chape 12 sur les barres 4, 5. Alternativement, les barres 4, 5 peuvent présenter un angle ou un cintrage délimitant les zones pour chaque chape 12 et donnant des variantes de cinématique.

Un système 70 de poussée en translation, de préférence un vérin 71 électrique alimenté par une batterie, est installé entre le châssis 3 porteur et le châssis 30 de levage. A cet effet, une chape 34 est positionnée sur la barre 61 parallèle au bord de cette barre 61 en contact avec le dispositif 19 de maintien de charge et deux chapes 35 sont reliées à la barre 31, une chape 35 étant positionnée sur chaque bord parallèle au bord de la barre 61 où la chape 34 est positionnée. En outre, une chape 36 est reliée solidairement au milieu de la barre 10 transversale du châssis porteur 3, la chape 36 étant positionnée sur le bord horizontal supérieur. Le vérin 71 présente une extrémité reliée au châssis 3 porteur par l'intermédiaire de la chape 36 et une autre extrémité reliée châssis 30 de levage par l'intermédiaire d'une des chapes 34, 35. Les liaisons entre les extrémités du vérin et les chapes 34, 35, 36 sont des liaisons pivot à axe horizontal. Alternativement, le système 70 de poussée en translation prend la forme d'un vérin hydraulique ou d'un système mécanique manuel, comme par exemple un vérin à vis manuel, un système à crémaillère, ou un vérin hydraulique à pompe manuelle.

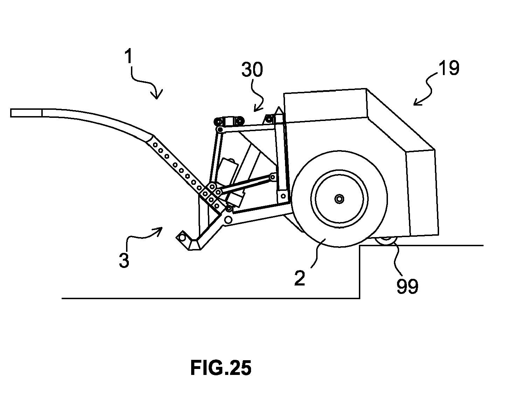

Le système de vérin peut être utilisé en rétraction de manière à ramener la benne 20 de la position X1 relevée à la position X0 au sol afin de permettre le franchissement d'obstacles de type marche ou trottoir. Comme montré sur les Figures 24 et 25, dans ce cas, on pose sur l'obstacle la partie située devant les roues 2 du dispositif 19 de maintien de charge. La rétraction du vérin permet ensuite de faire passer le châssis 3 porteur au niveau de l'obstacle. Le déplacement du dispositif 19 de maintien de charge sur l'obstacle par glissement jusqu'à ce que les roues 2 prennent appui sur l'obstacle permet alors de franchir l'obstacle. L'utilisation de roulettes référencées 99 sur les Figures 24 et 25 fixées dans la partie inférieure du dispositif 19 de maintien de charge permet de faciliter la dernière étape de déplacement dudit dispositif 19 sur l'obstacle.

Le système 70 de poussée en translation peut actionner un système d'accouplement fonctionnant selon le principe du mât télescopique (non représenté) afin d'avoir une hauteur de soulèvement supérieure à celle obtenue avec le système d'accouplement simple préalablement présenté.

Par ailleurs, un système 60 d'accouplement permet un accouplement ou un désaccouplement rapide de la benne 20 au châssis 30 de levage ainsi que le maintien de la benne 20 lors du roulage du véhicule 1. Ce système 60 est formé de préférence par la barre 61 transversale d'accouplement et deux profilés 62 en forme de U appartenant à la benne 20 et prenant appui sur la barre 61. La barre 61 transversale comporte deux pointes 64 en forme de pyramide ayant une forme complémentaire de renfoncements 65 en forme de pyramide managés dans les profilés 62. Ces pointes 64 insérées dans les renfoncements 65 permettent de centrer la benne 20 au moment de l'accouplement. Bien entendu, le système 60 d'accouplement rapide est également adapté pour fonctionner avec tout autre type de dispositif de maintien de charge (fourches à palettes, bac ou autres). En variante, les pointes 64 présentent une forme conique. Dans le cadre d'une utilisation en appui du dispositif de maintien de charge pour franchir des obstacles, la benne 20 est accouplée fixement avec le châssis de levage 30 au moyen d'un système d'axe à goupille pour éviter le désaccouplement de la benne 20 lors du franchissement de l'obstacle. En variante, la benne 20 fait partie intégrante de la structure du châssis 30 de levage, cette benne 20 comportant alors des éléments structurels en commun avec le châssis 30.

De préférence, le châssis 3 comporte en outre un système 11 de suspension destiné à amortir les chocs subis par les roues 2, limiter les contraintes mécaniques subies par les bras 8, 9 et stabiliser le véhicule 1 lors du roulage du véhicule 1. Dans un exemple, ce système 11 de suspension prend la forme d'un système à barre de torsion. Dans ce système à barre de torsion, les bras 8,9 sont mobiles par rapport à la barre 10 transversale, au moyen de deux liaisons pivots positionnées entre les extrémités de la barre 10 transversale et les bras 8, 9. Ce système 11 de suspension permet en outre d'améliorer le confort de l'utilisateur et de limiter les risques de perte de chargement lors du roulage du véhicule 1.

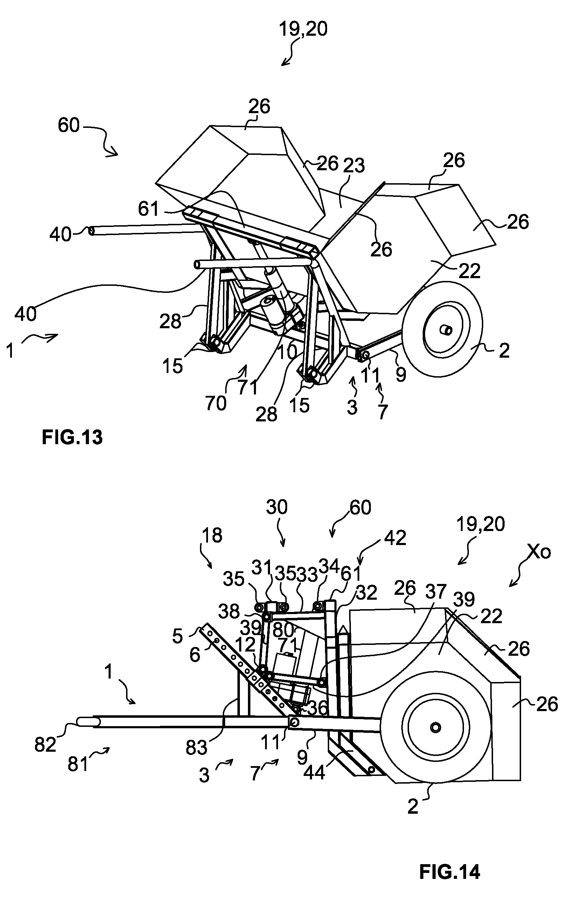

Le véhicule 1 pourra également comporter quatre pieds 15 au sol reliés solidairement à la barre 10 transversale pour maintenir à l'arrêt lors du chargement le véhicule 1 à l'horizontale. Deux des quatre pieds 15 sont reliés solidairement au même niveau que la jonction entre les barres 4, 5 et forment un angle γ de 90 degrés avec ces barres 4, 5. Un élément 16 de renfort est positionné entre chaque barre 4, 5 et le pied 15 positionné au même niveau que cette barre 4, 5. En variante, comme montré sur la Figure 13, le châssis 30 de levage est dépourvu des barres 31, 33. Le système 18 d'accouplement est alors formé par une barre 28 reliée solidairement par une de ses extrémités aux barres verticales 32 et par une autre extrémité aux pieds 15 via une liaison pivot à axe horizontal.

Comme montré sur les Figures 1 à 16, la benne 20 comporte dans un exemple de réalisation deux parois 21, 22 en regard l'une de l'autre, en forme d'hexagone non régulier. Ces deux parois 21, 22 sont reliées solidairement entre elles par une paroi 23 inférieure dans un plan P1, une paroi 24 dans un plan P2 perpendiculaire au plan P1 et une paroi 25 inclinée par rapport aux parois 23, 24 positionnée entre ces parois 23, 24. Les trois côtés de chaque paroi 21, 22 en forme d'hexagone non reliés aux parois 23, 24, 25 sont reliés solidairement à des panneaux 26 inclinés d'un angle δ de l'ordre de 45 degrés par rapport à la paroi 21, 22 en forme d'hexagone. Un panneau 27 est relié solidairement à la paroi 24 verticale. Les panneaux 26 sont reliés entre eux ainsi qu'aux parois 23 horizontales et au panneau 27 et permettent d'amener à l'intérieur de la benne 20 le plus de chargement possible et de protéger les roues 2 et le châssis 3 porteur. En variante, la benne 20 ne comporte pas de panneaux 26, 27. Il est évident que l'homme du métier saura adapter la forme et la taille de la benne 20 à la densité et au type de matériau à transporter.

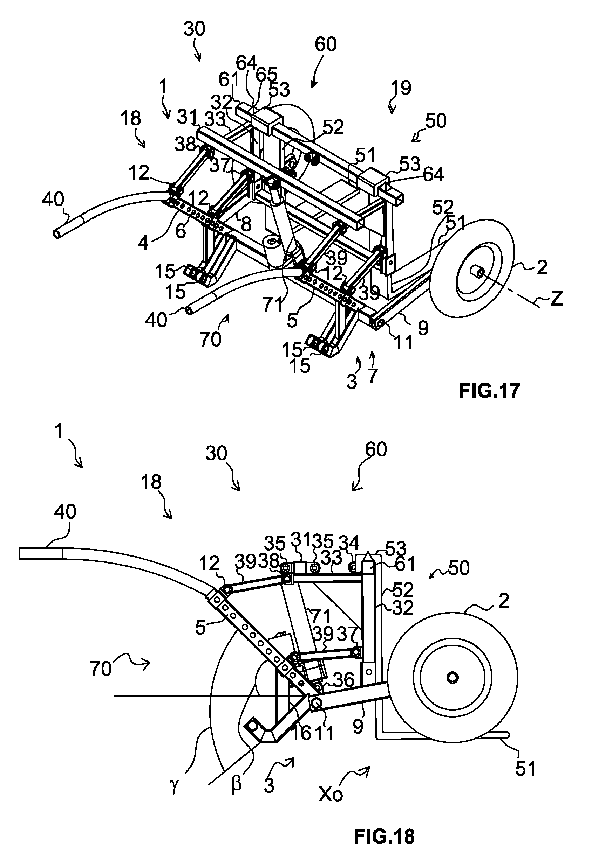

En variante, la benne 20 est remplacée par un bac c'est-à-dire un récipient comportant par rapport à la benne 20 une paroi supplémentaire fermant la benne, bien adapté notamment au transport de liquide ou de produit. La benne 20 peut également être remplacée par des pinces, un godet dit « godet 4 en 1 » ou une paire de fourches à palettes 50, comme le montre les Figures 17 à 20. Chaque fourche 50 comporte une plaque 51 horizontale et une plaque 52 verticale. Ces deux plaques 51, 52 sont perpendiculaires et reliées solidairement entre elles. Chaque fourche 50 comporte en outre un profilé 53 en forme de U prenant appui sur la barre 61 transversale.

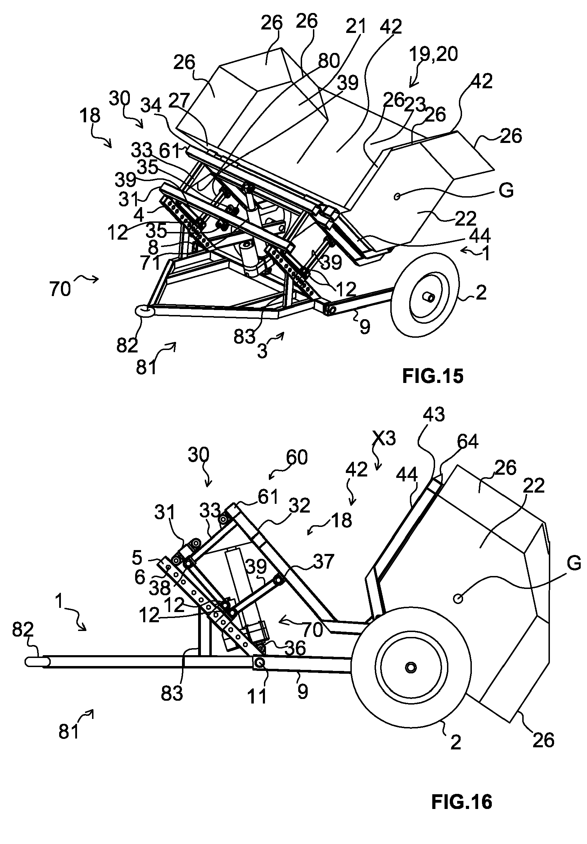

En variante, comme visible notamment sur la Figure 14, le système 60 d'accouplement est formé par un ensemble 42, sur lequel la benne 20 est fixée, mobile en rotation par rapport au châssis 3 de levage via une liaison pivot horizontale située en dessous du châssis porteur 3 lorsque le véhicule 1 est dans la position X0 au sol. L'ensemble 42 peut ainsi passer d'une position X0, X1 dans laquelle l'ensemble 42 est en contact avec les barres 32, 61 à une position X3 dite position de déversement montrée sur la Figure 16 dans laquelle l'ensemble 42 est penché vers le sol. A cet effet, l'ensemble 42 est formé par un cadre comportant une barre 43 transversale d'accouplement comportant deux pointes 64 en forme de pyramide destinée à coopérer avec une barre de la benne 20 de forme complémentaire. Ce cadre comporte également deux barres 44 solidaires de la barre 43 comportant chacune une portion verticale (lorsque le véhicule 1 se trouve dans la position X0) et une portion inclinée portant à son extrémité la plus proche des roues 2 une liaison pivot à laquelle sont liées les extrémités des barres 32 du châssis de levage 30.

Dans un autre mode de réalisation montré sur les Figures 14 à 16, une structure 81 relie solidairement une tête 82 d'attelage à la barre 10 transversale, cette tête 82 étant destinée à être accrochée à un véhicule tracteur. Un élément 83 de renfort est positionné entre chaque barre 4, 5 et la structure 81.

Dans un autre mode de réalisation montré sur la Figure 21, deux brancards 41, de forme courbée et plus allongée que les brancards 40 sont reliés solidairement aux extrémités des barres 4, 5 pointant vers l'arrière du véhicule 1. Les brancards 40 sont destinés à être positionnés de part et d'autre d'un animal de trait. La chape 35 positionnée vers l'arrière du véhicule 1 est retirée.

Dans un exemple de réalisation, le châssis 3 porteur et le châssis 30 de levage sont en acier, en alliage métallique, en aluminium, en fibre de carbone, ou en matériau composite, plastique. La benne 20, le bac, ou la paire de fourches à palettes 50 sont réalisés en acier, en alliage métallique, en plastique, en polymère armés ou en aluminium. Les contraintes de poids du véhicule 1 influent sur le choix du matériau.

Lors de l'utilisation du véhicule 1 de transport, l'utilisateur choisit le type de véhicule 1 en fonction de la durée du transport à effectuer ainsi que du type et de la masse du matériau à transporter. L'utilisateur choisit ensuite en fonction du type de matériau à transporter de relier au châssis 30 de levage la benne 20, le bac, la paire de fourches à palettes 50, le godet dit « godet 4 en 1 », des pinces, des fourches à fumier ou tout autre équipement de chargement. Il positionne la benne 20, le bac ou la paire de fourches à palettes 50 sur le châssis 30 de levage en positionnant les profilés 53, 62 en forme de U sur la barre 61 transversale.

Pour le chargement de matériau en vrac au niveau du sol, l'utilisateur choisit la benne 20, montrée Figures 1 à 8. L'utilisateur positionne cette benne 20 dans une position X0 au sol montrée Figure 1 à 4. Dans cette position X0, la paroi 23 inférieure de la benne 20 est en contact avec le sol ou à proximité du sol. L'utilisateur positionne ensuite les chapes 12 pour obtenir une « cinématique à trajectoire en arc d'ellipse ». L'axe de rotation du chargement devant être le plus bas possible, afin de limiter le risque de déport du centre de gravité vers l'avant, l'utilisateur positionne les chapes 12 de chaque barre 4, 5 au niveau des deux orifices 6 adjacents ou légèrement espacés pour avoir un axe de rotation le plus proche du sol afin d'éviter le déport du centre G de gravité du chargement vers l'avant. L'utilisateur relie le système 70 de poussée en translation à la chape 34 afin d'optimiser la force de poussée ainsi que la course du système 70 de poussée. L'utilisateur remplit ensuite la benne 20 à l'aide d'un outil comme par exemple une pelle, un balais ou une lame, ou en faisant pénétrer la benne 20 dans le matériau. Après le chargement, le système 70 de poussée en translation soulève le châssis 30 de levage et la benne 20 jusqu'à une position X1 montrée Figures 6 à 8. Le positionnement des chapes 12 implique que durant le soulèvement de la benne 20, cette benne 20 effectue une rotation selon l'axe Y par rapport au châssis 3 porteur. Ce mouvement permet de relever la benne 20 en limitant la perte de matériaux pendant le soulèvement et le transport. Afin de procéder au déchargement du matériau, le système 70 de poussée en translation abaisse le châssis 30 de levage et la benne 20 jusqu'à la position X0 au sol. Le positionnement des chapes 12 implique que durant l'abaissement de la benne 20, cette benne 20 effectue une rotation selon l'axe Y par rapport au châssis 3 porteur. Lorsque la benne 20 est au sol, l'utilisateur décharge le matériau à l'aide d'un outil comme par exemple une pelle, un balais ou une lame, par basculement de l'ensemble dans le cas d'une brouette, ou par désaccouplement de la benne 20 et basculement manuel. La cinématique de chargement permet le chargement en utilisant le système de poussée en translation. Ce mode de réalisation demande de positionner les centres instantanés de rotation vers l'avant du véhicule. La cinématique de chargement permet le chargement par pénétration de la benne dans un tas de matériaux foisonnés.

Pour le chargement d'un matériau liquide, l'utilisateur choisit le bac. L'utilisateur positionne le bac dans une position X0 au sol. L'utilisateur positionne ensuite les chapes 12 pour obtenir une « cinématique à trajectoire quasi-rectiligne ». Les deux chapes 12 de chaque barre 4, 5 sont positionnées de sorte que les biellettes 39 reliées à ces deux chapes soient parallèles entre elles. L'utilisateur relie système 70 de poussée en translation à une des chapes 35 afin d'optimiser la force de poussée du système 70 de poussée en translation et la course du système 70 de poussée en translation. Le système 70 de poussée en translation soulève le châssis 30 de levage et le bac jusqu'à une position X1 relevée. Le positionnement des chapes 12 implique que durant le soulèvement du bac, ce bac effectue une translation par rapport au châssis 3 porteur. Ce mouvement permet de maintenir l'horizontalité du bac. Le remplissage du bac est effectué avec une trémie positionnée au dessus du bac par laquelle s'écoule le matériau liquide. Afin de procéder au déchargement du matériau, le système 70 de poussée en translation abaisse le châssis 30 de levage et le bac jusqu'à la position X0 au sol. Le positionnement des chapes 12 implique que durant l'abaissement de la benne 20, cette benne 20 effectue une translation par rapport au châssis 3 porteur. Cette trajectoire permet de ne pas faire pivoter le bac et de maintenir l'horizontalité du bac, afin d'éviter la perte du matériau contenu.

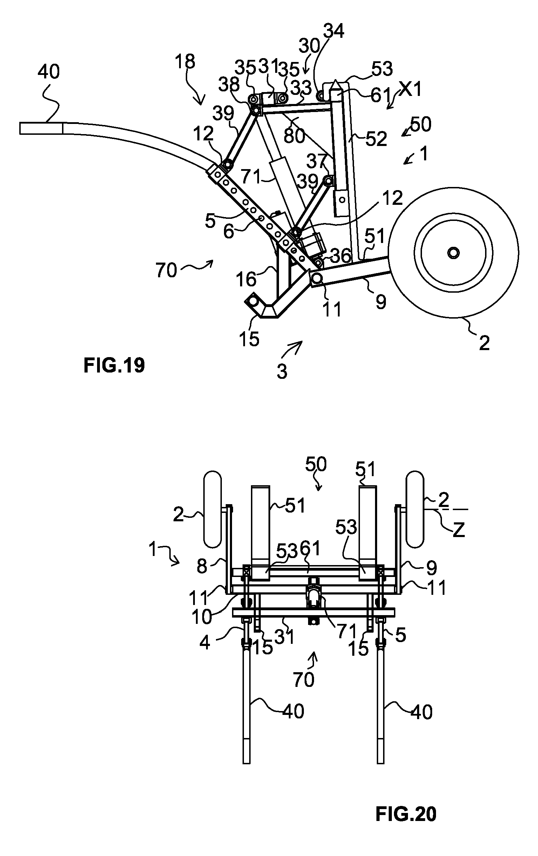

Pour le chargement de matériau se présentant d'un seul bloc ou de palettes, l'utilisateur choisit la paire de fourches à palettes 50, montrée Figures 17 à 20. L'utilisateur positionne cette paire de fourches à palettes 50 dans une position X0 au sol, montrée Figures 17, 18. L'utilisateur positionne ensuite les chapes 12 pour obtenir une «cinématique à trajectoire quasi-rectiligne ».Les deux chapes 12 de chaque barre 4, 5 sont positionnées de sorte que les biellettes 39 reliées à ces deux chapes soient parallèles entre elles. L'utilisateur relie le système 70 de poussée en translation à la chape 35 afin d'optimiser la force de poussée et la course de ce système 70 de poussée. L'utilisateur positionne la paire de fourches à palettes 50 en dessous du matériau à transporter. Après le chargement, le système 70 de poussée en translation soulève le châssis 30 de levage et la paire de fourches à palettes 50 jusqu'à une position X1 relevée, montrée Figure 19. Le positionnement des chapes 12 implique que durant le soulèvement de la paire de fourches à palettes 50, cette paire de fourche 50 effectue une translation par rapport au châssis 3 de levage. Ce mouvement permet de ne pas faire pivoter la paire de fourches à palettes 50 et de maintenir l'horizontalité de la paire de fourches à palettes 50, afin d'éviter la perte du matériau. Afin de procéder au déchargement du matériau, le système 70 de poussée en translation abaisse le châssis 30 de levage et la paire de fourches à palettes 50 jusqu'à la position X0 au sol ou à une position inférieure au niveau des roues 2 (utiles en cas de terrain non plat). Le positionnement des chapes 12 implique que durant l'abaissement de la paire de fourche 50, cette paire de fourches à palettes 50 suive une trajectoire en parallélogramme. Ce mouvement permet de ne pas faire pivoter la paire de fourches à palettes 50 et de maintenir l'horizontalité de la paire de fourches à palettes 50, afin d'éviter la perte du matériau.

On note que la phase de transport du matériau par le véhicule 1 est différente en fonction du véhicule 1 choisi. Pour une brouette, l'utilisateur soulève les brancards 40 et pousse la brouette. Pour une remorque, l'utilisateur positionne la tête 82 d'attelage de la remorque sur la boule d'attelage d'un véhicule tracteur. Pour un chariot (montré en Figure 21), l'utilisateur positionne les brancards 40 du chariot de part et d'autre d'un animal de trait. Pour un véhicule automoteur, l'avancement du véhicule est effectué par une roue motrice ou un ou plusieurs essieux moteurs. Les roues 2 peuvent également être motorisées par un système de moteur.

Il est évident pour l'homme du métier que les caractéristiques décrites apparaissant sur un seul des modes de réalisation du véhicule selon l'invention pourraient être transposés dans un autre mode de réalisation de l'invention ne présentant pas cette caractéristique.

Dans la description de l'invention ci-dessus, les termes « vertical », « horizontal », « arrière », « avant », sont entendus pour un véhicule 1 en position normale d'utilisation reposant sur un sol plat, la partie avant étant positionnée du côté du dispositif 19 de maintien de charge et la partie arrière étant positionnée du côté opposé c'est-à-dire du côté des brancards 40 ou de la tête d'attelage 82.

## Revendications

1. Véhicule (1) de transport avec chargement au sol comportant
- au moins deux roues (2),
- un châssis (3) porteur comportant une pièce (7) en forme de U comportant deux bras (8, 9) en regard l'un de l'autre, les roues (2) étant fixées sur les deux bras (8, 9) de la pièce (7) en forme de U,
- un dispositif (19) de maintien de charge, comme par exemple une benne (20),
**caractérisé en ce qu'**il comporte en outre :
- un châssis (30) de levage lié de façon mobile au châssis (3) porteur par l'intermédiaire d'un système (18) d'accouplement,
- le dispositif (19) de maintien de charge étant porté par le châssis (30) de levage, permettant de maintenir le chargement, ce dispositif (19) de maintien de charge occupant au moins en partie l'espace intérieur de la pièce (7) en forme de U s'étendant entre les deux bras (8, 9) de la pièce (7) en forme de U, de sorte qu'un axe (Z) de rotation des roues (2) s'étendant entre les deux roues (2) traverse le dispositif (19) de maintien de charge lorsque le dispositif (19) de maintien de charge est dans une position (X0) au sol,
- le châssis (30) de levage étant mobile par rapport au châssis (3) porteur, ce châssis (30) de levage assurant le passage du dispositif (19) de maintien de charge de la position (X0) au sol permettant le chargement du dispositif (19) de maintien de charge à au moins une position (X1) relevée permettant le déplacement du véhicule (1),
- le système (18) d'accouplement assurant un déplacement du châssis (30) de levage de sorte que le centre (G) de gravité d'un chargement du dispositif (19) de maintien de charge se déplace vers l'arrière du véhicule lorsque ledit dispositif (19) de maintien de charge passe de la position (X0) au sol à la position (X1) relevée,
- le système (18) d'accouplement présente au minimum une première cinématique dans laquelle le dispositif (19) de maintien se déplace vers l'arrière du véhicule en s'inclinant vers l'arrière du véhicule de manière à assurer le maintien du chargement du dispositif (19) de maintien lorsque ledit dispositif (19) de maintien de charge passe de la position (X0) au sol à la position (X1) relevée.

2. Véhicule selon la revendication 1, **caractérisé en ce que** dans la première cinématique le dispositif (19) de maintien se déplace en s'inclinant vers l'arrière du véhicule de manière à simultanément déporter le centre de gravité (G) du chargement et assurer le maintien du chargement dans le dispositif (19) de maintien lorsque ledit dispositif (19) de maintien de charge passe de la position (X0) au sol à la position (X1) relevée.

3. Véhicule selon la revendication 1 ou 2, **caractérisé en ce que** le système (18) d'accouplement présente une deuxième cinématique dans laquelle le dispositif (19) de maintien de charge se déplace vers l'arrière du véhicule en maintenant le chargement à l'horizontal lorsque ledit dispositif (19) de maintien de charge passe de la position (X0) au sol à la position (X1) relevée, le système (18) d'accouplement pouvant passer d'une cinématique à l'autre.

4. Véhicule selon l'une des revendications 1 à 3, **caractérisé en ce que** le centre (G) de gravité du chargement du dispositif (19) de maintien de charge est situé derrière l'axe (Z) de rotation des roues (2) lorsque ledit dispositif (19) de maintien de charge est dans la position (X0) au sol.

5. Véhicule selon l'une des revendications 1 à 4, **caractérisé en ce qu'**il comporte un système (70) de poussée en translation, de préférence un vérin (71), installé entre le châssis (3) porteur et le châssis (30) de levage ou directement sur le système (18) d'accouplement.

6. Véhicule selon l'une des revendications 1 à 5, **caractérisé en ce que** le dispositif de maintien de charge (19) est choisi notamment parmi : une benne (20), un bac, une paire de fourches à palettes (50), des pinces ou un godet dit « godet 4 en 1 ».

7. Véhicule selon la revendication 3, **caractérisé en ce que** le système (18) d'accouplement est multi-cinématique, ledit système (18) d'accouplement comportant des chapes (12) coulissantes sur le châssis (3) porteur et/ou sur le châssis (30) de levage et des biellettes (39) établissant la liaison entre le châssis (3) porteur et le châssis (30) de levage, de sorte que
- dans la première cinématique, dite « cinématique à trajectoire en arc d'ellipse », le châssis (30) de levage est mobile en rotation par rapport au châssis (3) porteur autour d'un axe (Y) parallèle à l'axe (Z) de rotation des roues (2), de sorte que le châssis (30) de levage assure par mouvement en arc d'ellipse le passage du dispositif (19) de maintien de la position (X0) au sol à la position (X1) relevée, et
- dans la deuxième cinématique dite « cinématique à trajectoire quasi-rectiligne », le châssis (30) de levage est mobile en translation par rapport au châssis (3) porteur, de sorte que le châssis (30) de levage assure par translation le passage du dispositif (19) de maintien de charge de la position (X0) au sol à la position (X1) relevée en maintenant parallèle le fond du dispositif (19) de maintien de charge par rapport au sol.

8. Véhicule selon l'une des revendications 1 à 7, **caractérisé en ce que** le châssis porteur (3) et le châssis (30) de levage présentent chacun deux côtés perpendiculaires l'un par rapport à l'autre.

9. Véhicule selon l'une des revendications 1 à 8, **caractérisé en ce que** le système (18) d'accouplement présente une troisième cinématique, dite « cinématique de chargement » permettant de charger des matériaux en vrac dans le dispositif (19) de maintien de charge prenant la forme d'une benne (20).

10. Véhicule selon la revendication 7, **caractérisé en ce que** l'axe (Y) passant par des centres instantanés de rotation définis par
- l'intersection des droites passant par les deux biellettes (39) situées sur un des flancs du véhicule, et par
- l'intersection des droites passant par les deux biellettes (39) situées sur un flanc opposé,
est situé en dessous du centre (G) de gravité du chargement de manière à permettre le déport de charge vers l'arrière du véhicule dès le commencement de l'élévation.

11. Véhicule selon l'une des revendications 1 à 10, **caractérisé en ce que** le dispositif (19) de maintien de charge est couplé au châssis (30) de levage de manière amovible par un système (60) d'accouplement rapide permettant la dépose du support (19).

12. Véhicule selon l'une des revendications 1 à 11, **caractérisé en ce qu'**il comporte un système (11) de suspension positionné au niveau des intersections entre les bras (8, 9) de la pièce (7) en forme de U du châssis (3) porteur de manière à rendre les deux bras (8, 9) auxquels les roues (2) sont fixées indépendants l'un de l'autre.

13. Véhicule selon l'une des revendications 1 à 12, **caractérisé en ce que** les roues (2) sont motorisées par un système de moteur.

14. Véhicule selon revendications 1 à 13, **caractérisé en ce qu'**il comporte une tête (82) d'attelage ou un dispositif d'accouplement relié au châssis (3) porteur permettant le couplage du véhicule à un dispositif assurant sa motricité.

15. Véhicule selon l'une des revendications 1 à 14, **caractérisé en ce que** le dispositif (19) de maintien de charge comporte des roulettes (99) fixées sur la partie inférieure du dispositif (19) de maintien de charge pour faciliter le franchissement d'obstacles, tels que des marches ou un trottoir.

## Patentansprüche

1. Transportfahrzeug (1) mit Bodenbeladung, umfassend
- mindestens zwei Räder (2),
- ein Traggestell (3), umfassend ein U-förmiges Stück (7), umfassend zwei Arme (8, 9), die einander gegenüberliegen, wobei die Räder (2) an den beiden Armen (8, 9) des U-förmigen Stücks (7) befestigt sind,
- eine Vorrichtung (19) zum Halten einer Ladung, wie beispielsweise eine Schaufel (20),
**dadurch gekennzeichnet, dass** es ferner umfasst:
- ein Hubgestell (30), das beweglich mit dem Traggestell (3) mit Hilfe eines Kupplungssystems (18) verbunden ist,
- wobei die Vorrichtung (19) zum Halten einer Ladung von dem Hubgestell (30) getragen wird, das es ermöglicht, die Ladung zu halten, wobei diese Vorrichtung (19) zum Halten einer Ladung mindestens einen Teil des Innenraums des U-förmigen Stücks (7) einnimmt, der sich zwischen den beiden Armen (8, 9) des U-förmigen Stücks (7) erstreckt, so dass eine Drehachse (Z) der Räder (2), die sich zwischen den beiden Rädern (2) erstreckt, durch die Vorrichtung (19) zum Halten einer Ladung hindurchgeht, wenn die Vorrichtung (19) zum Halten einer Ladung in einer Position (X0) am Boden angeordnet ist,
- wobei das Hubgestell (30) in Bezug zum Traggestell (3) beweglich ist, wobei dieses Hubgestell (30) den Übergang der Vorrichtung (19) zum Halten einer Ladung von der Position (X0) am Boden, die die Beladung der Vorrichtung (19) zum Halten einer Ladung ermöglicht, in mindestens eine angehobene Position (X1) gewährleistet, die die Bewegung des Fahrzeugs (1) ermöglicht,
- wobei das Kupplungssystem (18) eine Bewegung des Hubgestells (30) ermöglicht, so dass der Schwerpunkt (G) einer Ladung der Vorrichtung (19) zum Halten einer Ladung nach hinten zum Fahrzeug verschoben wird, wenn die Vorrichtung (19) zum Halten einer Ladung von der Position (X0) am Boden in die angehobene Position (X1) übergeht,
- wobei das Kupplungssystem (18) mindestens eine erste Kinematik aufweist, in der sich die Haltevorrichtung (19) nach hinten zum Fahrzeug verschiebt, wobei sie sich nach hinten zum Fahrzeug neigt, um das Halten der Ladung der Haltevorrichtung (19) zu gewährleisten, wenn die Vorrichtung (19) zum Halten einer Ladung von der Position (X0) am Boden in die angehobene Position (X1) übergeht.

2. Fahrzeug nach Anspruch 1, **dadurch gekennzeichnet, dass** sich in der ersten Kinematik die Haltevorrichtung (19) verschiebt, wobei sie sich nach hinten zum Fahrzeug neigt, um gleichzeitig den Schwerpunkt (G) der Ladung zu verlagern und das Halten der Ladung in der Haltevorrichtung (19) zu gewährleisten, wenn die Vorrichtung (19) zum Halten einer Ladung von der Position (X0) am Boden in die angehobene Position (X1) übergeht.

3. Fahrzeug nach Anspruch 1 oder 2, **dadurch gekennzeichnet, dass** das Kupplungssystem (18) eine zweite Kinematik aufweist, in der sich die Vorrichtung (19) zum Halten einer Ladung nach hinten zum Fahrzeug verschiebt, wobei sie die Ladung in der Horizontalen hält, wenn die Vorrichtung (19) zum Halten einer Ladung von der Position (X0) am Boden in die angehobene Position (X1) übergeht, wobei das Kupplungssystem (18) von einer Kinematik in die andere übergehen kann.

4. Fahrzeug nach einem der Ansprüche 1 bis 3, **dadurch gekennzeichnet, dass** der Schwerpunkt (G) der Ladung der Vorrichtung (19) zum Halten einer Ladung hinter der Drehachse (Z) der Räder (2) angeordnet ist, wenn sich die Vorrichtung (19) zum Halten einer Ladung in der Position (X0) am Boden befindet.

5. Fahrzeug nach einem der Ansprüche 1 bis 4, **dadurch gekennzeichnet, dass** es ein Translationsschubsystem (70), vorzugsweise einen Zylinder (71), umfasst, der zwischen dem Traggestell (3) und dem Hubgestell (30) oder direkt auf dem Kupplungssystem (18) installiert ist.

6. Fahrzeug nach einem der Ansprüche 1 bis 5, **dadurch gekennzeichnet, dass** die Vorrichtung (19) zum Halten einer Ladung insbesondere ausgewählt ist unter: einer Schaufel (20), einem Behälter, einem Paar von Palettengabeln (50), Klammern oder einem Becher, "4-in-1-Becher" genannt.

7. Fahrzeug nach Anspruch 3, **dadurch gekennzeichnet, dass** das Kupplungssystem (18) eine Mehrfachkinematik ist, wobei das Kupplungssystem (18) Gabelstücke (12), die auf dem Traggestell (3) und/oder auf dem Hubgestell (30) gleiten, und Schwingarme (39) umfasst, die die Verbindung zwischen dem Traggestell (3) und dem Hubgestell (30) herstellen, so dass
- in der ersten Kinematik, "Kinematik mit ellipsenbogenförmiger Bahn" genannt, das Hubgestell (30) in Bezug zum Traggestell (3) um eine Achse (Y) parallel zur Drehachse (Z) der Räder (2) drehbeweglich ist, so dass das Hubgestell (30) durch ellipsenbogenförmige Bewegung den Übergang der Haltevorrichtung (19) von der Position (X0) am Boden in die angehobene Position (X1) gewährleistet, und
- in der zweiten Kinematik, "Kinematik mit gleichsam gerader Bahn" genannt, das Hubgestell (30) in Bezug zum Traggestell (3) in Translation beweglich ist, so dass das Hubgestell (30) durch Translation den Übergang der Vorrichtung (19) zum Halten einer Ladung von der Position (X0) am Boden in die angehobene Position (X1) gewährleistet, wobei der Boden der Vorrichtung (19) zum Halten einer Ladung parallel zum Boden gehalten wird.

8. Fahrzeug nach einem der Ansprüche 1 bis 7, **dadurch gekennzeichnet, dass** das Traggestell (3) und das Hubgestell (30) jeweils zwei Seiten, die zueinander senkrecht sind, aufweisen.

9. Fahrzeug nach einem der Ansprüche 1 bis 8, **dadurch gekennzeichnet, dass** das Kupplungssystem (18) eine dritte Kinematik, "Ladekinematik" genannt, aufweist, die es ermöglicht, lose Materialien in die Vorrichtung (19) zum Halten einer Ladung, die die Form einer Schaufel (20) annimmt, zu laden.

10. Fahrzeug nach Anspruch 7, **dadurch gekennzeichnet, dass** die Achse (Y), die durch momentane Drehmittelpunkte geht, die definiert sind durch
- den Schnittpunkt der Geraden, die durch die beiden Schwingarme (39) gehen, die sich auf einer der Seiten des Fahrzeugs befinden, und durch
- den Schnittpunkt der Geraden, die durch die beiden Schwingarme (39) gehen, die sich auf einer gegenüberliegenden Seite befinden,
unter dem Schwerpunkt (G) der Ladung angeordnet ist, um die Verlagerung der Ladung nach hinten zum Fahrzeug bei Beginn des Anhebens zu ermöglichen.

11. Fahrzeug nach einem der Ansprüche 1 bis 10, **dadurch gekennzeichnet, dass** die Vorrichtung (19) zum Halten einer Ladung an das Hubgestell (30) durch ein Schnellkupplungssystem (60), das die Ablage des Trägers (19) ermöglicht, lösbar gekoppelt ist.

12. Fahrzeug nach einem der Ansprüche 1 bis 11, **dadurch gekennzeichnet, dass** es ein Aufhängungssystem (11) umfasst, das im Bereich der Schnittpunkte zwischen den Armen (8, 9) des U-förmigen Stücks (7) des Traggestells (3) angeordnet ist, um die beiden Arme (8, 9), an denen die Räder (2) befestigt sind, voneinander unabhängig zu machen.

13. Fahrzeug nach einem der Ansprüche 1 bis 12, **dadurch gekennzeichnet, dass** die Räder (2) durch ein Motorsystem motorbetrieben sind.

14. Fahrzeug nach den Ansprüchen 1 bis 13, **dadurch gekennzeichnet, dass** es einen Anhängekopf (82) oder eine Kupplungsvorrichtung, der/die mit dem Traggestell (3) verbunden ist, umfasst, der/die die Kupplung des Fahrzeugs mit einer Vorrichtung, die seine Motorik gewährleistet, ermöglicht.

15. Fahrzeug nach einem der Ansprüche 1 bis 14, **dadurch gekennzeichnet, dass** die Vorrichtung (19) zum Halten einer Ladung Rollen (99) umfasst, die auf dem unteren Teil der Vorrichtung (19) zum Halten einer Ladung befestigt sind, um die Überwindung von Hindernissen, wie Stufen oder einem Gehsteig, zu erleichtern.

## Claims

1. Ground-loading transport vehicle (1) comprising
- at least two wheels (2),
- a supporting frame (3) comprising a U-shaped part (7) comprising two arms (8, 9) facing one another, the wheels (2) being fixed onto the two arms (8, 9) of the U-shaped part (7),
- a load-holding device (19), such as a dumpster (20),
**characterized in that** it further comprises:
- a lifting frame (30) movably linked to the supporting frame (3) via a coupling system (18),
- the load-holding device (19) being borne by the lifting frame (30), making it possible to hold the load, this load-holding device (19) at least partly occupying the interior space of the U-shaped part (7) extending between the two arms (8, 9) of the U-shaped part (7), such that a rotation axis (Z) of the wheels (2) extending between the two wheels (2) passes through the load-holding device (19) when the load-holding device (19) is in a position (X0) on the ground,
- the lifting frame (30) being mobile relative to the supporting frame (3), this lifting frame (30) ensuring the switching of the load-holding device (19) from the position (X0) on the ground making it possible to load the load-holding device (19) to at least one raised position (X1) making it possible to move the vehicle (1),
- the coupling system (18) ensuring a displacement of the lifting frame (30) such that the centre of gravity (G) of a load of the load-holding device (19) is displaced towards the rear of the vehicle when said load-holding device (19) switches from the position (X0) on the ground to the raised position (X1),
- the coupling system (18) exhibits at least one first kinematic behaviour in which the holding device (19) is displaced towards the rear of the vehicle by tilting towards the rear of the vehicle so as to ensure that the load of the holding device (19) is held when said load-holding device (19) switches from the position (X0) on the ground to the raised position (X1).

2. Vehicle according to Claim 1, **characterized in that**, in the first kinematic behaviour, the holding device (19) is displaced by tilting towards the rear of the vehicle so as to simultaneously shift the centre of gravity (G) of the load and ensure that the load is held in the holding device (19) when said load-holding device (19) switches from the position (X0) on the ground to the raised position (X1).

3. Vehicle according to Claim 1 or 2, **characterized in that** the coupling system (18) exhibits a second kinematic behaviour, in which the load-holding device (19) is displaced towards the rear of the vehicle while keeping the load horizontal when said load-holding device (19) switches from the position (X0) on the ground to the raised position (X1), the coupling system (18) being able to switch from one kinematic behaviour to the other.

4. Vehicle according to one of Claims 1 to 3, **characterized in that** the centre of gravity (G) of the load of the load-holding device (19) is situated behind the rotation axis (Z) of the wheels (2) when said load-holding device (19) is in the position (X0) on the ground.

5. Vehicle according to one of Claims 1 to 4, **characterized in that** it comprises a translational thrust system (70), preferably an actuation cylinder (71), installed between the supporting frame (3) and the lifting frame (30) or directly on the coupling system (18).

6. Vehicle according to one of Claims 1 to 5, **characterized in that** the load-holding device (19) is chosen notably from among: a dumpster (20), a tank, a pair of pallet forks (50), clamps or a bucket called "4-in-1 bucket".

7. Vehicle according to Claim 3, **characterized in that** the coupling system (18) is multi-kinematic, said coupling system (18) comprising fork joints (12) sliding over the supporting frame (3) and/or over the lifting frame (30) and connecting rods (39) establishing the link between the supporting frame (3) and the lifting frame (30), such that
- in the first kinematic behaviour, called an "elliptical arc trajectory kinematic behaviour", the lifting frame (30) is rotationally mobile relative to the supporting frame (3) about an axis (Y) parallel to the rotation axis (Z) of the wheels (2), such that the lifting frame (30) ensures, by elliptical arc movement, the switching of the holding device (19) from the position (X0) on the ground to the raised position (X1), and
- in the second kinematic behaviour, called a "quasi-rectilinear trajectory kinematic behaviour", the lifting frame (30) is translationally mobile relative to the supporting frame (3), such that the lifting frame (30) ensures, by translation, the switching of the load-holding device (19) from the position (X0) on the ground to the raised position (X1) while keeping the bottom of the load-holding device (19) parallel to the ground.

8. Vehicle according to one of Claims 1 to 7, **characterized in that** the supporting frame (3) and the lifting frame (30) each have two sides at right angles to one another.

9. Vehicle according to one of Claims 1 to 8, **characterized in that** the coupling system (18) exhibits a third kinematic behaviour, called a "loading kinematic behaviour", making it possible to load bulk materials in the load-holding device (19) taking the form of a dumpster (20).

10. Vehicle according to Claim 7, **characterized in that** the axis (Y) passing through the instantaneous centres of rotation defined by
- the intersection of the straight lines passing through the two connecting rods (39) situated on one of the flanks of the vehicle, and by
- the intersection of the straight lines passing through the two connecting rods (39) situated on an opposite flank,
is situated below the centre of gravity (G) of the load so as to allow load to be shifted towards the rear of the vehicle as soon as the lifting commences.

11. Vehicle according to one of Claims 1 to 10, **characterized in that** the load-holding device (19) is removably coupled to the lifting frame (30) by a quick-release coupling system (60) making it possible to remove the support (19).

12. Vehicle according to one of Claims 1 to 11, **characterized in that** it comprises a suspension system (11) positioned at the intersections between the arms (8, 9) of the U-shaped part (7) of the supporting frame (3) so as to render the two arms (8, 9) to which the wheels (2) are fixed independent of one another.

13. Vehicle according to one of Claims 1 to 12, **characterized in that** the wheels (2) are driven by a motor system.

14. Vehicle according to Claims 1 to 13, **characterized in that** it comprises a harnessing head (82) or a coupling device linked to the supporting frame (3) making it possible to couple the vehicle to a device ensuring the driving thereof.

15. Vehicle according to one of Claims 1 to 14, **characterized in that** the load-holding device (19) comprises castors (99) fixed onto the bottom part of the load-holding device (19) to facilitate the crossing of obstacles, such as steps or a pavement.
